(19) Europäisches Patentamt / European Patent Office / Office européen des brevets

(11) **EP 4 015 097 B1**

(12) **EUROPEAN PATENT SPECIFICATION**

(45) Date of publication and mention
of the grant of the patent:
**03.12.2025 Bulletin 2025/49**

(21) Application number: **21203678.4**

(22) Date of filing: **20.10.2021**

(51) International Patent Classification (IPC):
**B07C 5/36** *(2006.01)* **B25J 9/16** *(2006.01)*
**G05B 19/418** *(2006.01)*

(52) Cooperative Patent Classification (CPC):
**B07C 5/36; B25J 9/1697;** B07C 2501/0063;
G05B 19/4182; G05B 2219/39102;
G05B 2219/39106; G05B 2219/40554;
G05B 2219/40617; Y02P 90/02

(54) **PICKING DEVICE**

KOMMISSIONIERVORRICHTUNG

DISPOSITIF DE PRÉLÈVEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2020 JP 2020207554**

(43) Date of publication of application:
**22.06.2022 Bulletin 2022/25**

(73) Proprietor: **Panasonic Intellectual Property
Management Co., Ltd.
Osaka-shi, Osaka 540-6207 (JP)**

(72) Inventors:
• **MIYAJI, Naoya**
  **Osaka, 540-6207 (JP)**
• **ABE, Seikou**
  **Osaka, 540-6207 (JP)**

(74) Representative: **Vigand, Philippe et al
Novagraaf International SA
Chemin de l'Echo 3
1213 Onex - Genève (CH)**

(56) References cited:
WO-A1-2020/147713      CN-A- 108 593 669
JP-A- 2015 198 429      US-A1- 2006 072 988
US-A1- 2010 094 453

**Description**

BACKGROUND

1. Technical Field

The present disclosure relates to a picking device that picks and sorts a specific workpiece by a robot from a plurality of types of workpieces that are sorting objects to be transported.

2. Description of the Related Art

In recent years, in various industries in the world, a picking device, which picks and sorts a specific component by a robot from a plurality of types of components that are sorting objects, is often used. For example, in a field of home appliance recycling, from a disassembled product or a crushed product, which is no longer needed and is disassembled or roughly crushed to a size of a component, a specific component is recognized and picked to be sorted and recovered for recycling.

As a conventional picking device, for example, there is a device disclosed in Japanese Patent No. 5464176. FIG. 4 is a view illustrating the conventional picking device described in Japanese Patent No. 5464176.

Other relevant prior art documents include US2010/094453 A1, CN108593669 A and WO2020/147713 A1

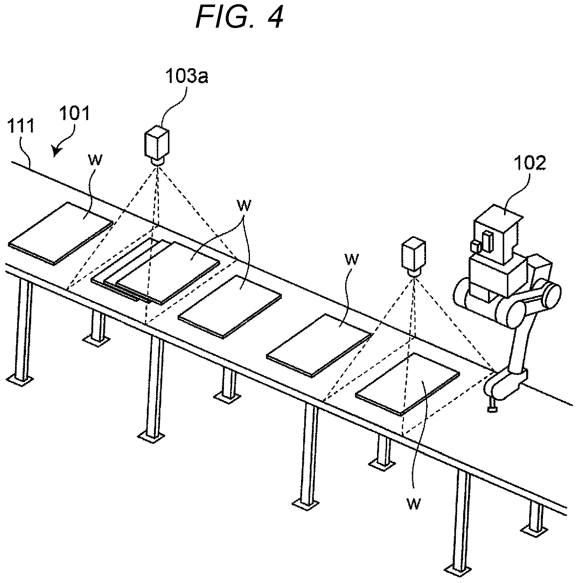

In FIG. 4, conveyor 101 transports workpiece w placed on conveyor 101 in one direction. Workpiece w being transported is imaged by two-dimensional imaging device 103a that images transport path 111 from above, workpiece w on transport path 111 is detected based on a captured image, and a holding operation of detected workpiece w is instructed to robot 102 disposed on a downstream side of imaging device 103a, so that workpiece w can be moved from transport path 111 to a predetermined place.

On the other hand, as another picking device, for example, there is a device disclosed in Japanese Patent No. 5837065. FIG. 5 is a view of the picking device described in Japanese Patent No. 5837065.

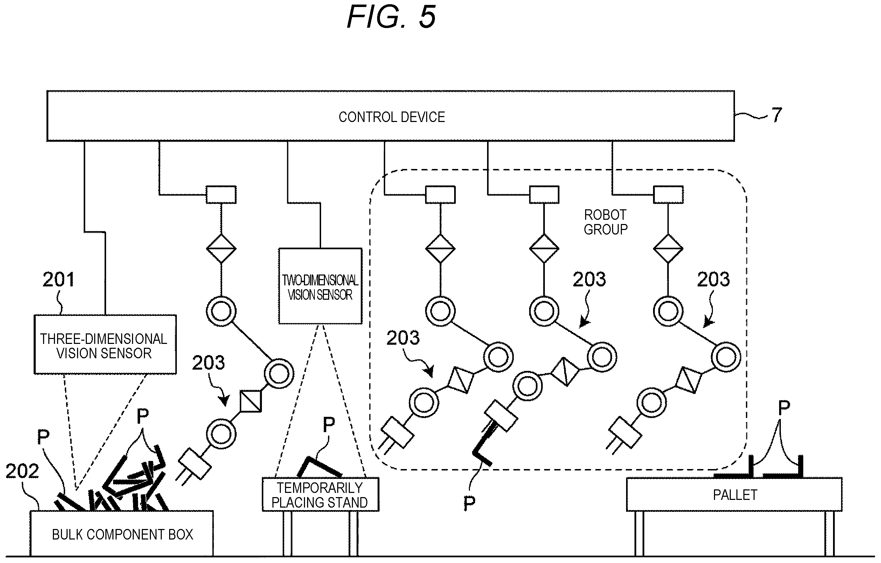

In FIG. 5, height information is utilized to measure an outer shape, a position, and a posture of component P by imaging components P randomly stacked in bulk component box 202 as workpieces by three-dimensional vision sensor 201. From the measured information, an instruction can be given to robot 203 that grips component P and component P can be moved to a predetermined place.

SUMMARY

The present invention is defined in the appended claims.

BRIEF DESCRIPTION OF THE DRAWINGS

FIG. 1 is a schematic configuration view of a picking device according to Exemplary Embodiment 1 of the present disclosure;
FIG. 2 is a schematic view illustrating configuration elements of a part of a picking device according to Exemplary Embodiment 2 of the present disclosure as viewed from an upper portion of a transporter;
FIG. 3 is a schematic view illustrating configuration elements of a part of a picking device according to Exemplary Embodiment 3 of the present disclosure as viewed from an upper portion of a transporter;
FIG. 4 is a schematic configuration view of a conventional picking device described in Japanese Patent No. 5464176; and

FIG. 5 is a schematic configuration view of a conventional picking device described in Japanese Patent No. 5837065.

DETAILED DESCRIPTIONS

In the configuration of Japanese Patent No. 5464176, since a two-dimensional imaging device is provided, it is not possible to obtain information on a three-dimensional outer shape, a position, and a posture.

On the other hand, in the configuration of Japanese Patent No. 5837065, three-dimensional information can be obtained, but only a stationary workpiece can be imaged.

In general, a three-dimensional imaging device takes time to capture an image, so that an accurate image cannot be acquired because a movement object blurs when the moving workpiece is imaged.

As described above, the conventional example has a problem that the three-dimensional imaging device cannot acquire the three-dimensional information such as the three-dimensional outer shape, the position, and the posture of the workpiece being transported without the movement object blur.

The present disclosure is given for solving the above-described conventional problems, and an object thereof is to provide a picking device capable of acquiring three-dimensional information of a workpiece without movement object blur by using a three-dimensional imaging device even for a moving workpiece.

Hereinafter, exemplary embodiments of the present disclosure will be described with reference to the drawings.

Exemplary Embodiment 1

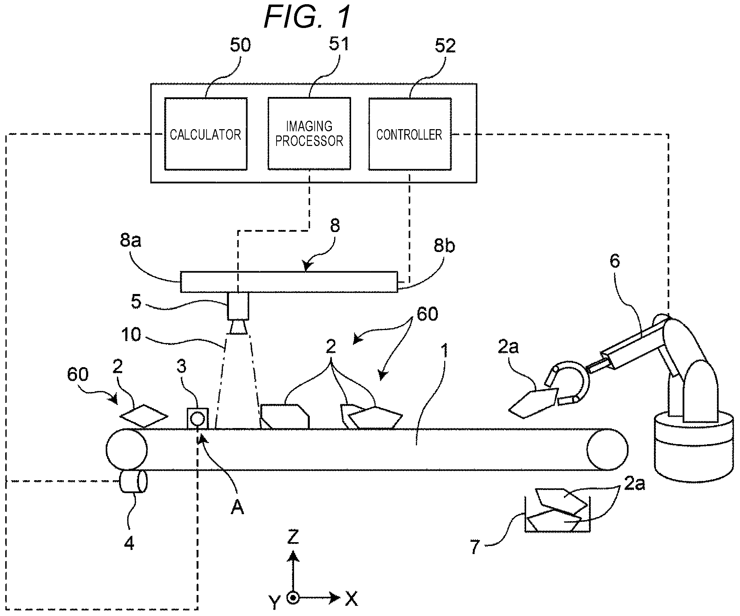

FIG. 1 is a schematic configuration view of a picking device according to Exemplary Embodiment 1 of the present disclosure.

The picking device includes transporter 1, imaging device 5, object detector 3, movement amount detection device 4, movement mechanism 8, robot 6, imaging processor 51, and controller 52, and extracts and sorts specific workpiece 2a from a plurality of workpieces 2 which are disassembled products or crushed products of goods.

In the present specification, a plurality of workpieces 2 of which position coordinates (that is, X coordinates in FIG. 1) overlap each other in a transport direction of workpiece 2 which is a disassembled product or a crushed product of goods are treated as one workpiece group 60. Conversely, a plurality of workpieces 2 of which position coordinates (that is, X coordinates in FIG. 1) do not overlap each other in the transport direction of workpiece 2 are treated as a plurality of workpiece groups 60.

Transporter 1 transports the plurality of workpieces 2 in the transport direction that is one direction, for example, at a constant transport speed. In FIG. 1, transporter 1 transports a large number of workpieces 2, which are placed on transporter 1 and include various types such as the disassembled products of goods in the transport direction (for example, to the right in FIG. 1) that is one direction at a transport speed. Here, workpiece group 60 configured of the plurality of workpieces 2 also includes workpiece group 60 in which the plurality of workpieces 2 are arranged at equal intervals, but also includes workpiece group 60 in which the plurality of workpieces 2 are not arranged at equal intervals, and the plurality of workpieces 2 are supplied to transporter 1 at random intervals and transported. As an example of transporter 1, there is a conveyor, and workpiece 2 is placed on a conveyor belt.

Imaging device 5 is disposed above transporter 1, can be reciprocated by movement mechanism 8, and images each workpiece 2 and workpiece group 60 of transporter 1 while moving in the transport direction to acquire three-dimensional information such as positions and shapes of each workpiece 2 and workpiece group 60. Imaging device 5 can move within a movement range defined by upstream limit 8a and downstream limit 8b.

Object detector 3 is configured of, for example, a photoelectric sensor and is attached to transporter 1 to detect an object, that is, each workpiece 2 that passes through specific position A on transporter 1, thereby detecting that workpiece 2 to be transported has passed specific position A of transporter 1. Since object detector 3 continuously outputs a detection signal while detecting the object, as a result, it is also possible to detect a distance between workpiece 2 and workpiece 2 in the transport direction. It is desirable that object detector 3 is installed on an upstream side with respect to an upstream end of imaging device view field 10 of imaging device 5, which is located at an upstream end of the movement range, in the transport direction.

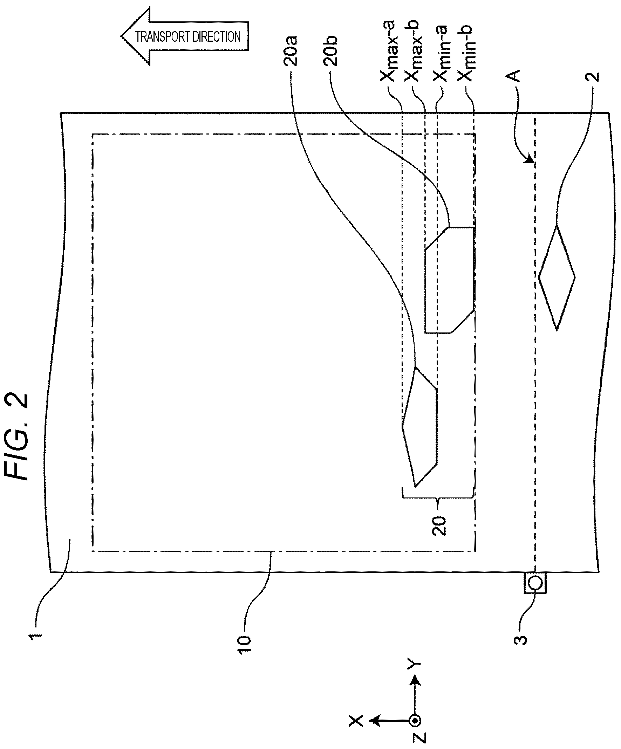

Object detector 3 detects timing when workpiece 2 to be transported has passed specific position A on transporter 1. As illustrating in FIGS. 1 and 2, an example of specific position A includes a linear shape which is along a width direction orthogonal to the transport direction of transporter 1 and is located between the upstream end of transporter 1 and the upstream end of the imaging device view field.

Movement amount detection device 4 is attached to transporter 1, and measures a workpiece movement amount of workpiece 2 by transporter 1 from specific position A after object detector 3 detects that workpiece 2 has passed specific position A to issue a measurement signal indicating the workpiece movement amount. An example of movement amount detection device 4 is an encoder attached to a motor that drives a belt in a case where transporter 1 is a belt conveyor.

Based on the measurement signal from movement amount detection device 4, movement mechanism 8 synchronizes imaging device 5 with the transport speed of workpiece 2 of transporter 1 and moves imaging device 5 in a transport direction parallel to the transport direction of transporter 1 at the same speed as the transport speed. Movement mechanism 8 is configured of, for example, a motor that is capable of driving forward/reverse rotation drive, a ball screw that is disposed in the transport direction and capable of forward/reverse rotation by the motor, and a support bracket that is screwed on the ball screw to support imaging device 5. Movement mechanism 8 advances and retreats the support bracket in the transport direction via the ball screw by the forward/reverse rotation of the motor.

Imaging processor 51 performs image processing based on the three-dimensional information acquired by imaging workpiece 2 while imaging device 5 moves in the transport direction, and acquires necessary information necessary for sorting specific workpiece 2a. That is, imaging processor 51 processes the image information of workpiece 2 imaged by imaging device 5 by image recognition, and derives the information of workpiece 2 necessary for sorting by robot 6, including position coordinates, angles, and types.

Based on the necessary information acquired by imaging processor 51, robot 6 holds workpiece 2 to be transported, moves workpiece 2 from transporter 1 to a predetermined position outside transporter 1, and sorts workpiece 2.

Controller 52 receives the detection signal of object detector 3 and the measurement signal from movement amount detection device 4, and controls an operation of each of imaging device 5, movement mechanism 8, robot 6, and imaging processor 51 based on the input information and the transport speed of transporter 1.

A method of detecting the position of workpiece 2 on transporter 1 will be described.

Object detector 3 detects the timing when workpiece 2 has passed specific position A on transporter 1. Movement amount detection device 4 detects the movement amount of workpiece 2 by transporter 1 and outputs the measurement signal. By calculating the signal from object detector 3 and the measurement signal from movement amount detection device 4 by calculator 50, the position of workpiece 2 transported on transporter 1 in the transport direction on the downstream side of specific position A can be detected.

By grasping the position of each workpiece 2 by the above method, imaging device 5 can be controlled by controller 52 so that imaging device 5 attached to an upper portion of transporter 1 toward a transport surface of transporter 1 starts imaging at timing when workpiece 2 is placed in the view field. Here, "starts imaging at timing when workpiece 2 is placed in the view field" means when a shadow of one workpiece group 60 disappears and there is a space between workpiece group 60 and workpiece group 60, for example, when workpiece group 60 is projected in a transverse direction of the transporter while observing the upstream end of the imaging device view field.

After that, controller 52 sends the information of workpiece 2 necessary for sorting acquired from imaging processor 51 to robot 6 and also sends the measurement signal of movement amount detection device 4 to robot 6. Therefore, robot 6 picks only specific workpiece 2a of a specific type to be sorted from workpiece 2, and controller 52 controls robot 6 so as to move workpiece 2 to recovery box 7 outside transporter 1, thereby capable of sorting specific workpiece 2a.

Here, in a case where a three-dimensional imaging device capable of acquiring three-dimensional information is used as imaging device 5, it is possible to easily specify the type, the position, and specification of overlapping of workpiece 2, and to improve accuracy of sorting by robot 6.

However, in general, the three-dimensional imaging device takes time to capture an image, so when workpiece 2 being transported on transporter 1 is imaged, movement object blur occurs from a relationship between the transport speed of transporter 1 and an image capturing time of imaging device 5. Therefore, accurate information of workpiece 2 cannot be obtained and highly accurate picking cannot be performed.

Therefore, the movement object blur can be reduced by performing imaging while moving imaging device 5 in the transport direction at the same transport speed in synchronization with the movement of workpiece 2 of transporter 1. Therefore, movement mechanism 8 synchronizes imaging device 5 with the transport speed of transporter 1 to move imaging device 5 in the transport direction at the same transport speed and in parallel with the transport direction of transporter 1. Here, calculator 50 derives timing when workpiece 2 of an imaging object is transported into imaging device view field 10 of imaging device 5 from a signal from object detector 3, a measurement signal from movement amount detection device 4, and a current position of imaging device 5. Next, controller 52 issues an instruction to movement mechanism 8 so that movement mechanism 8 moves imaging device 5 in parallel while synchronizing with transporter 1, and reduces a relative speed between transporter 1, that is, workpiece 2 of the imaging object and imaging device 5.

Here, the position of imaging device 5 is detected by a position detector (for example, an encoder of a motor capable of driving forward/reverse rotation) included in movement mechanism 8 for moving imaging device 5, and the current position of imaging device 5 can be acquired.

Actually, controller 52 controls movement mechanism 8 so that movement mechanism 8 starts the movement of imaging device 5 at timing when an acceleration time is considered until imaging device 5 reaches a speed synchronized with transporter 1.

As described above, under the control of controller 52, imaging device 5 is moved in the transport direction in synchronization with transporter 1 to perform imaging by imaging device 5, so that even in three-dimensional imaging of workpiece 2 being transported using imaging device 5, it is possible to perform imaging with reduced movement object blur, and to perform sorting by highly accurate picking based on the imaging information.

However, when imaging device 5 moves in the transport direction, eventually, imaging device 5 ends up at downstream limit 8b in the transport direction, so it is necessary to perform an operation of returning of return imaging device 5 to an original position thereof. Here, the original position is, for example, upstream limit 8a in the transport direction of imaging device 5 in movement mechanism 8. The operation of returning imaging device 5 to the original position has to be performed during non-imaging of imaging device 5, that is, from the completion of imaging of certain workpiece group 60 to the start of imaging of next transported workpiece group 60. Therefore, calculator 50 derives the distance and position between workpiece groups 60 in the transport direction of workpiece group 60 based on the signal from object detector 3 and the measurement signal from movement amount detection device 4. Next, controller 52 issues an instruction to movement mechanism 8 of timing and a returning amount for returning imaging device 5 in a direction of the original position based on a derivation result of calculator 50.

In a case where each of workpiece groups 60 has the same shape and is transported on transporter 1 at equal intervals, the returning amounts by movement mechanism 8 may be the same and the timing may be a constant interval. In a case where each of workpiece groups 60 has an irregular shape or the timing of transport is random, it is necessary to control the adjustment of the returning amount and the timing.

Similarly, in a case where each of workpiece groups 60 has an irregular shape or the timing of transport is random, imaging device 5 may not return to the original position by one return operation depending on the distance between workpiece groups 60. That is, in order to image certain workpiece group 60, imaging device 5 images while being moved by movement mechanism 8, and after the imaging is completed and before starting the imaging of next workpiece group 60, it is necessary to move imaging device 5 to upstream limit 8a where movement mechanism 8 is the original position. However, in a case of a positional relationship in which before the movement of imaging device 5 to upstream limit 8a is completed, workpiece group 60 of the next imaging object passes through imaging device view field 10 of imaging device 5, it is necessary to start the next imaging before the movement to upstream limit 8a is completed. In that case, calculator 50 calculates a returning amount in time for the next imaging timing, and imaging device 5 returns to a position where the next imaging is possible based on the returning amount, and performs the next imaging.

Here, whether there is a case of a positional relationship in which workpiece group 60 of the next imaging object passes through imaging device view field 10 of imaging device 5 before the movement of imaging device 5 to upstream limit 8a is completed can be detected as follows. For example, the current position of workpiece group 60 can be detected by object detector 3 and movement amount detection device 4, and since the transport speed is known, a point, at which imaging device view field 10 of imaging device 5 attached to movement mechanism 8 trying to return to upstream limit 8a and workpiece group 60 to be transported intersect, can be acquired by calculation. When both sides reach that position, the next imaging is started.

With the above configuration, even in a case where imaging device 5 performs imaging while moving in the transport direction in synchronization with the transport operation by transporter 1, imaging device 5 does not end up at downstream limit 8b of movement mechanism 8 and can repeat the imaging. Upstream limit 8a and downstream limit 8b may be set at arbitrary positions instead of the physical end points of movement mechanism 8. However, upstream limit 8a needs to exist upstream of downstream limit 8b.

As described above, according to Exemplary Embodiment 1, imaging device 5 follows transporter 1 that transports workpiece 2 and can image workpiece 2 while moving imaging device 5 in parallel in the transport direction while synchronizing with the transport speed of transporter 1. Therefore, the three-dimensional information of workpiece 2 being transported, which could not be acquired in the past, can be acquired without movement object blur even by a three-dimensional imaging device that takes time to capture an image, and based on the acquired three-dimensional information, even workpiece 2 having a non-constant shape such as a disassembled product or a crushed product of goods can be picked with high accuracy to sort specific workpiece 2a.

Exemplary Embodiment 2

FIG. 2 is a schematic view illustrating configuration elements of a part of a picking device according to Exemplary Embodiment 2 of the present disclosure as viewed from the upper portion of transporter 1. In FIG. 2, the same reference numerals are used for the same configuration elements as those in FIG. 1, and the description thereof will be omitted.

The reciprocating operation of imaging device 5 by movement mechanism 8 in Exemplary Embodiment 1 is a repetition of the movement of imaging device 5 during imaging in the transport direction and the movement of imaging device 5 during non-imaging in the direction opposite to the transport direction. If the non-imaging time is shorter than the time for moving imaging device 5 from the position of imaging device 5 at the end of imaging to upstream limit 8a, imaging device 5 does not return to upstream limit 8a and imaging device 5 starts to move in the transport direction for imaging next workpiece group 60. By making the reciprocating operation of imaging device 5 by movement mechanism 8 efficient, the length of movement mechanism 8 can be designed to be short.

Based on the detection signal from object detector 3 and the measurement signal from movement amount detection device 4, calculator 50 specifies the position of workpiece group 20 configured of a plurality of workpieces 2 and not spaced in the transport direction. At the timing when the position is placed in the upstream side of imaging device view field 10, the imaging accompanied by the movement of imaging device 5 by movement mechanism 8 is started, so that the time loss is reduced and the reciprocating operation of imaging device 5 by movement mechanism 8 can be performed. That is, the position of workpiece group 20 in the imaging device view field is calculated by calculator 50 from the relationship between the position of workpiece group 20 in the transport direction obtained from object detector 3 and movement amount detection device 4 and the current position of imaging device 5, and this timing is calculated by calculator 50 as timing when only workpiece group 20, in which shadows of the plurality of workpieces 2 become one when workpiece group 20 is projected in a transverse direction of the transporter from a calculation result, is placed within the imaging device view field. Controller 52 controls movement mechanism 8 so as to start the movement of imaging device 5 at the calculated timing. By doing so, the time loss is small, and the reciprocating operation of imaging device 5 by movement mechanism 8 is possible.

Here, workpiece group 20 that is not spaced in the transport direction is workpiece group 20 in which the shadows of the plurality of workpieces 2 become one when workpiece 2 is projected in the transverse direction of the transporter. That is, in each of two different workpieces 20a and 20b constituting workpiece group 20 of FIG. 2, when the transport direction is defined as X-axis, a tip of workpiece 20a on the downstream side in the transport direction is defined as Xmax-a, a rear end of workpiece 20a on the upstream side in the transport direction is defined as Xmin-a, a tip of workpiece 20b on the downstream side in the transport direction is defined as Xmax-b, and a rear end of workpiece 20b on the upstream side in the transport direction is defined as Xmin-b, workpiece group 20 is referred in which the following two relational expressions (1) and (2) are satisfied.

$$\text{Xmax-a} > \text{Xmax-b} > \text{Xmin-a} > \text{Xmin-b} \ (1)$$

$$\text{Xmax-a} > \text{Xmax-b} > \text{Xmin-b} > \text{Xmin-a} \ (2)$$

Workpiece 20a and workpiece 20b may be located opposite to each other in the transport direction.

If the above relational expressions (1) and (2) are satisfied for any two workpieces 20a and 20b, there is no upper limit to the number of workpiece groups 20 that are not spaced in the transport direction.

In a case where one workpiece 2 is being transported without forming workpiece group 20 that is not spaced in the transport direction, the imaging accompanied by the movement of imaging device 5 may be started by movement mechanism 8 at the timing when workpiece 2 is placed on the upstream side of imaging device view field 10.

As described above, the reciprocating operation of imaging device 5 by movement mechanism 8 can be made efficient, and the length of movement mechanism 8 can be designed to be short.

Exemplary Embodiment 3

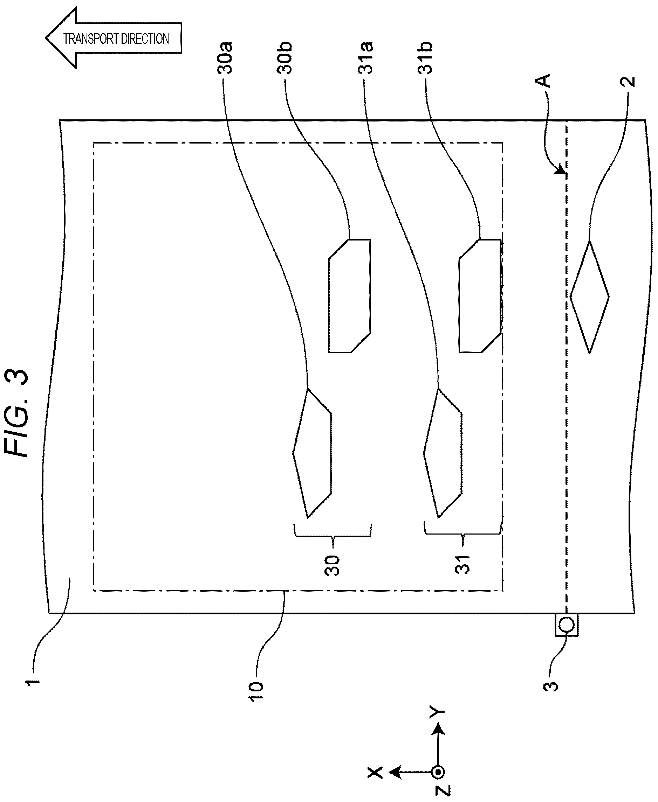

FIG. 3 is a schematic view illustrating configuration elements of a part of a picking device according to Exemplary Embodiment 3 of the present disclosure as viewed from the upper portion of transporter 1. In FIG. 3, the same reference numerals are used for the same configuration elements as those in FIGS. 1 and 2, and the description thereof will be omitted.

The reciprocating operation of movement mechanism 8 in Exemplary Embodiment 1 is a repetition of the movement during imaging in the transport direction and the movement during non-imaging in the direction opposite to the transport direction. If the non-imaging time is shorter than the time being moved from the position of imaging device 5 at the end of imaging to upstream limit 8a, imaging device 5 does not return to upstream limit 8a and starts to move from the middle of the movement in the opposite direction, that is, from the middle of returning, in the transport direction for imaging next workpiece group 60. Imaging processor 51 performs image processing on unprocessed workpiece group 60 existing in the captured image, and issues an instruction to robot 6 via controller 52.

In this way, by making the reciprocating operation of imaging device 5 by movement mechanism 8 efficient, the length of movement mechanism 8 can be designed to be short.

Based on the signal from object detector 3 and the measurement signal from movement amount detection device 4, the position of workpiece group 60 in the transport direction, the distance between workpiece groups 60 in the transport direction, and the waiting time until the imaging timing are calculated by calculator 50. At the same time, by calculating also the time required for the reciprocating operation of imaging device 5 by movement mechanism 8, it is possible to calculate time T1 to wait for the plurality of workpiece groups 60 that are not spaced in the transport direction respectively, that is, first workpiece group 30 and second workpiece group 31 in FIG. 3 are placed within imaging device view field 10, and time T2 to start the reciprocating operation and the imaging of imaging device 5 by movement mechanism 8 at the timing when first workpiece group 30 is placed within imaging device view field 10, and start the reciprocating operation and the imaging of imaging device 5 by movement mechanism 8 for imaging second workpiece group 31 after the imaging and reciprocating operations are ended. In a case where a relationship between time T1 and time T2 satisfies T1 < T2, as in Exemplary Embodiment 2, the imaging is not started at the timing when first workpiece group 30 is placed upstream of imaging device view field 10 and start of the imaging is waited until the timing when second workpiece group 31 is placed upstream of imaging device view field 10, so that the reciprocating operation of imaging device 5 by movement mechanism 8 can be made efficient, and the length of movement mechanism 8 can be designed to be short. In other words, in a case where T1 < T2 is satisfied, first workpiece group 30 and second workpiece group 31 are imaged at the same time. Therefore, since there is no reciprocating operation in first workpiece group 30 and second workpiece group 31, respectively, the moving distance is the smallest. Specifically, the position of workpiece group 60 within the imaging device view field is calculated from the relationship between the position of workpiece group 60 in the transport direction obtained from object detector 3 and movement amount detection device 4 and the current position of imaging device 5, and the imaging start timing when the moving distance of imaging device 5 to downstream is the smallest is calculated by calculator 50. Imaging is performed at the timing obtained by calculation.

In the example of FIG. 3, the picking device determines the reciprocating operation of imaging device 5 based on the relationship between workpiece groups T1 and T2. However, the present exemplary embodiment is not limited to this, and the reciprocating operation of imaging device 5 may be determined based on the relationship between T1 and T2 of the workpieces. For example, calculator 50 calculates the position of each of the plurality of workpieces within the imaging device view field from the relationship between the position of each of the plurality of works in the transport direction and the current position of the imaging device, and may calculate the imaging start timing when the moving distance of the imaging device to downstream is the smallest.

As described above, according to the picking device according to the exemplary embodiment of the present disclosure, the imaging device follows the transporter that transports the workpiece and can image the workpiece while moving the imaging device in parallel in the transport direction while synchronizing with the transport speed of the transporter. Therefore, the three-dimensional information of the workpiece being transported, which could not be acquired in the past, can be acquired without movement object blur even by the three-dimensional imaging device that takes time to capture the image, and based on the acquired three-dimensional information, even the workpiece having a non-constant shape such as a disassembled product or a crushed product of goods can be picked with high accuracy to sort the specific workpiece.

By appropriately combining any exemplary embodiment or modified example of the various exemplary embodiments or the modified examples, the effects of the respective exemplary embodiments or modified examples can be achieved. Further, it is possible to combine the exemplary embodiments or the examples, or the exemplary embodiments and the examples, and also to combine the features in the different exemplary embodiments or the examples.

Since the picking device according to the above aspect of the present disclosure can sort the workpiece that requires three-dimensional information by high-accurate picking, it is also possible to apply to a usage for sorting and recovering a workpiece of which a shape is not constant, such as a disassembled product or a crushed product of goods, or sorting fruits according to their shape or size.

**Claims**

1. A picking device that selectively picks up a specific workpiece (2a) to be sorted from a plurality of workpieces (2) which are disassembled products or crushed products of goods and whose shape is not constant, the picking device comprising:

   a transporter (1) that transports the plurality of workpieces (2) at random intervals in a transport direction that is one direction at a transport speed;
   an imaging device (5) that is disposed above the transporter (1) and acquires three-dimensional information of each of the plurality of workpieces (2) by imaging each of the plurality of workpieces (2);
   an object detector (3) that detects that each of the plurality of workpieces (2) to be transported has passed through a specific position of the transporter (1);
   a movement amount detection device (4) that measures a workpiece movement amount of each of the plurality of workpieces (2) by the transporter (1) after the object detector (3) detects that each of the plurality of workpieces (2) has passed the specific position, and issues a measurement signal indicating the measured workpiece movement amount of each of the plurality of workpieces (2);
   a movement mechanism (8) that moves the imaging device (5) in the transport direction at the same speed as the transport speed in synchronization with the transport speed of the transporter (1) based on the measurement signal from the movement amount detection device (4);
   an imaging processor (51) that performs image processing based on the three-dimensional information acquired by the imaging device (5) and generates necessary information necessary for selectively picking up the specific workpiece (2a) from the plurality of workpieces (2), the necessary information including position coordinates, angles, and types of workpieces;
   a robot (6) that holds the specific workpiece (2a) from the plurality of workpieces (2) and moves the held specific workpiece (2a) to a predetermined position based on the necessary information acquired by the imaging processor (51); and
   a controller (52) that controls a movement of the imaging device (5) by the movement mechanism based on the transport speed of the transporter (1) and the measurement signal from the movement amount detection device

(4), and controls an operation of the robot (6) based on the transport speed of the transporter (1), the measurement signal from the movement amount detection device (4), and the necessary information acquired by the imaging processor (51),

wherein the controller (52) controls the movement of the imaging device (5) by the movement mechanism (8), and the controller (52) causes the robot (6) to hold the specific workpiece (2a) to move to the predetermined position to perform sorting the plurality of workpieces (2),

wherein the plurality of workpieces (2) are transported at intervals in the transport direction,

the picking device further comprising:

a calculator (50) that calculates the intervals of the plurality of workpieces (2) based on detection information from the object detector (3) is provided, and

the controller (52) controls the movement mechanism (8) so as to move the imaging device (5) in a direction opposite to the transport direction before starting imaging based on the calculated intervals,

wherein the calculator (50) calculates a movement amount of the imaging device (5) in the direction opposite to the transport direction based on the intervals of the plurality of workpieces (2), and

the controller (52) controls the movement mechanism (8) so as to move the imaging device (5) in the direction opposite to the transport direction before starting imaging by the calculated movement amount,

the picking device still further comprising:

a calculator that calculates a position of each of the plurality of workpieces (2) within an imaging device view field (10) from a relationship between the position of each of the plurality of workpieces (2) in the transport direction and a current position of the imaging device (5) obtained from the object detector (3) and the movement amount detection device (4), and calculates timing when only a workpiece group (20), in which shadows of the plurality of workpieces (2) become one, is placed within the imaging device view field (10) when the plurality of workpieces (2) are projected in a transverse direction of the transporter (1) from the calculated position of each of the plurality of workpieces (2), where when in each of two different workpieces (20a and 20b) constituting the workpiece group (20) the transport direction is defined as X-axis, a tip of the first workpiece (20a) on the downstream side in the transport direction is defined as Xmax-a, a rear end of the first workpiece (20a) on the upstream side in the transport direction is defined as Xmin-a, a tip of the second workpiece (20b) on the downstream side in the transport direction is defined as Xmax-b, and a rear end of the second workpiece (20b) on the upstream side in the transport direction is defined as Xmin-b, the workpiece group (20) is referred in which one of the following two relational expressions (1) and (2) is satisfied:

$$Xmax\text{-}a > Xmax\text{-}b > Xmin\text{-}a > Xmin\text{-}b \ (1)$$

$$Xmax\text{-}a > Xmax\text{-}b > Xmin\text{-}b > Xmin\text{-}a \ (2),$$

wherein the work group (20), in which shadows of the plurality of workpieces (2) become one is the workpiece group (20) consisting of a plurality of workpieces (2) whose position coordinates (X) in the transport direction of workpiece overlap each other,

wherein the controller (52) controls the movement mechanism (8) so as to start the movement of the imaging device (5) at the calculated timing.

2. The picking device of claim 1,

wherein the imaging device (5) is configured to move within a movement range defined by an upstream limit and a downstream limit, and

the object detector (3) is disposed on an upstream side of the transporter (1) with respect to an upstream end of an imaging device view field (10) of the imaging device (5) located in the upstream limit in the transport direction.

**Patentansprüche**

1. Aufnahmevorrichtung, die selektiv ein spezifisches Werkstück (2a) aufnimmt, das von einer Vielzahl von Werkstücken (2) zu sortieren ist, die auseinandergebaute Produkte oder zerkleinerte Produkte von Gütern sind und deren Form nicht konstant ist, wobei die Aufnahmevorrichtung umfasst:

einen Transporter (1), der die Vielzahl von Werkstücken (2) in zufälligen Intervallen in einer Transportrichtung, die eine Richtung ist, mit einer Transportgeschwindigkeit transportiert;

eine Bildgebungsvorrichtung (5), die über dem Transporter (1) angeordnet ist und dreidimensionale Informationen von jedem der Vielzahl von Werkstücken (2) durch Abbilden jedes der Vielzahl von Werkstücken (2) erfasst;

einen Objektdetektor (3), der detektiert, dass jedes der Vielzahl von zu transportierenden Werkstücken (2) eine spezifische Position des Transporters (1) passiert hat;

eine Bewegungsbetrag-Feststellungsvorrichtung (4), die einen Werkstück-Bewegungsbetrag von jedem der Vielzahl von Werkstücken (2) durch den Transporter (1) misst, nachdem der Objektdetektor (3) detektiert hat, dass jedes der Vielzahl von Werkstücken (2) die spezifische Position passiert hat, und ein Messsignal ausgibt, das den gemessenen Werkstück-Bewegungsbetrag jedes der Vielzahl von Werkstücken (2) angibt;

einen Bewegungsmechanismus (8), der die Bildgebungsvorrichtung (5) in der Transportrichtung mit der gleichen Geschwindigkeit wie die Transportgeschwindigkeit in Synchronisation mit der Transportgeschwindigkeit des Transporters (1) basierend auf dem Messsignal von der Bewegungsbetrag-Feststellungsvorrichtung (4) bewegt;

einen Bildgebungsprozessor (51), der Bildverarbeitung basierend auf den dreidimensionalen Informationen durchführt, die von der Bildgebungsvorrichtung (5) erfasst wurden, und erforderliche Informationen erzeugt, die zum selektiven Aufnehmen des spezifischen Werkstücks (2a) von der Vielzahl von Werkstücken (2) erforderlich sind, wobei die notwendigen Informationen Positionskoordinaten, Winkel und Typen von Werkstücken umfassen;

einen Roboter (6), der das spezifische Werkstück (2a) von der Vielzahl von Werkstücken (2) hält und das gehaltene spezifische Werkstück (2a) zu einer vorbestimmten Position basierend auf den erforderlichen Informationen bewegt, die von dem Bildgebungsprozessor (51) erfasst werden; und

eine Steuereinrichtung (52), die eine Bewegung der Bildgebungsvorrichtung (5) mittels des Bewegungsmechanismus basierend auf der Transportgeschwindigkeit des Transporters (1) und dem Messsignal von der Bewegungsbetrag-Feststellungsvorrichtung (4) steuert und einen Betrieb des Roboters (6) basierend auf der Transportgeschwindigkeit des Transporters (1), dem Messsignal von der Bewegungsbetrag-Feststellungsvorrichtung (4) und den notwendigen Informationen, die von dem Bildgebungsprozessor (51) erfasst wurden, steuert,

wobei die Steuereinrichtung (52) die Bewegung der Bildgebungsvorrichtung (5) mittels des Bewegungsmechanismus (8) steuert und die Steuereinrichtung (52) den Roboter (6) veranlasst, das spezifische Werkstück (2a) zu halten, um sich zu einer vorbestimmten Position zu bewegen, um Sortieren der Vielzahl von Werkstücken (2) durchzuführen,

wobei die Vielzahl von Werkstücken (2) in Intervallen in der Transportrichtung transportiert werden, die Aufnahmevorrichtung ferner umfasst:

einen Rechner (50), der die Intervalle der Vielzahl von Werkstücken (2) basierend auf bereitgestellten Detektionsinformationen von dem Objektdetektor (3) berechnet, und

die Steuereinrichtung (52), die den Bewegungsmechanismus (8) derart steuert, dass die Bildgebungsvorrichtung (5) in einer Richtung, die der Transportrichtung vor dem Starten der Bildgebung entgegengesetzt ist, basierend auf den berechneten Intervallen bewegt wird,

wobei der Rechner (50) einen Bewegungsbetrag der Bildgebungsvorrichtung (5) in der Richtung entgegengesetzt zur Transportrichtung basierend auf den Intervallen der Vielzahl von Werkstücken (2) berechnet, und

die Steuereinrichtung (52) den Bewegungsmechanismus (8) derart steuert, dass die Bildgebungsvorrichtung (5) vor dem Starten von Bildgebung um den berechneten Bewegungsbetrag in der Richtung entgegengesetzt zur Transportrichtung bewegt wird,

die Aufnahmevorrichtung ferner noch umfasst:

einen Rechner, der eine Position jedes der Vielzahl von Werkstücken (2) innerhalb eines Bildgebungsvorrichtungssichtfelds (10) von einer Beziehung zwischen der Position von jedem der Vielzahl von Werkstücken (2) in der Transportrichtung und einer gegenwärtigen Position der Bildgebungsvorrichtung (5) berechnet, die von dem Objektdetektor (3) und der Bewegungsbetrag-Feststellungsvorrichtung (4) erhalten wird, und eine Zeit berechnet, wenn nur eine Werkstückgruppe (20), in der Schatten der Vielzahl von Werkstücken (2) einer werden, innerhalb des Bildgebungsvorrichtungssichtfelds (10) platziert ist, wenn die Vielzahl von Werkstücken (2) in einer Querrichtung des Transporters (1) von der berechneten Position jedes der Vielzahl von Werkstücken (2) projiziert werden, wobei, wenn in jedem von zwei unterschiedlichen Werkstücken (20a und 20b), welche die Werkstückgruppe (20) bilden, die Transportrichtung als X-Achse definiert ist, eine Spitze des ersten Werkstücks (20a) auf der nachgelagerten Seite in der Transportrichtung als Xmax-a definiert ist, ein hinteres Ende des ersten Werkstücks (20a) auf der vorgelagerten Seite in der Transportrichtung als Xmin-a definiert ist, eine Spitze des zweiten Werkstücks (20b) auf der nachgelagerten Seite in der Transportrichtung als Xmax-b definiert ist und ein hinteres Ende des zweiten Werkstücks (20b) auf der vorgelagerten Seite in der Transportrichtung als Xmin-b definiert ist, die Werkstückgruppe (20) bezeichnet wird, in der einer der folgenden Beziehungsausdrücke (1) und (2) erfüllt ist:

$$Xmax\text{-}a > Xmax\text{-}b > Xmin\text{-}a > Xmin\text{-}b \quad (1)$$

$$Xmax\text{-}a > Xmax\text{-}b > Xmin\text{-}b > Xmin\text{-}a \quad (2)$$

wobei die Werkstückgruppe (20), in der Schatten der Vielzahl von Werkstücken (2) einer werden, die Werkstückgruppe (20) ist, die aus einer Vielzahl von Werkstücken (2) besteht, deren Positionskoordinaten (X) in der Transportrichtung des Werkstücks einander überlappen,
wobei die Steuereinrichtung (52) den Bewegungsmechanismus (8) derart steuert, dass er die Bewegung der Bildgebungsvorrichtung (5) am berechneten Zeitpunkt startet.

2. Aufnahmevorrichtung nach Anspruch 1,

wobei die Bildgebungsvorrichtung (5) dazu ausgestaltet ist, sich mit einem Bewegungsbereich zu bewegen, der von einer vorgelagerten Grenze und einer nachgelagerten Grenze definiert ist, und
der Objektdetektor (3) auf einer vorgelagerten Seite des Transporters (1) in Bezug auf ein vorgelagertes Ende eines Bildgebungsvorrichtungssichtfelds (10) der Bildgebungsvorrichtung (5) angeordnet ist, das sich in der vorgelagerten Grenze in der Transportrichtung befindet.

**Revendications**

1. Dispositif de prélèvement qui prélève sélectivement une pièce spécifique (2a) à trier parmi une pluralité de pièces (2) qui sont des produits démontés ou des produits broyés de marchandises et dont la forme n'est pas constante, le dispositif de prélèvement comprenant :

un transporteur (1) qui transporte la pluralité de pièces (2) à intervalles aléatoires dans une direction de transport qui est une direction à une vitesse de transport ;
un dispositif d'imagerie (5) qui est disposé au-dessus du transporteur (1) et acquiert des informations tridimensionnelles de chacune de la pluralité de pièces (2) en imageant chacune de la pluralité de pièces (2) ;
un détecteur d'objet (3) qui détecte le fait que chacune de la pluralité de pièces (2) à transporter est passée par une position spécifique du transporteur (1) ;
un dispositif de détection de quantité de mouvement (4) qui mesure une quantité de mouvement de pièce de chacune de la pluralité de pièces (2) par le transporteur (1) après que le détecteur d'objet (3) a détecté que chacune de la pluralité de pièces (2) est passée par la position spécifique et émet un signal de mesure indiquant la quantité de mouvement de pièce mesurée de chacune de la pluralité de pièces (2) ;
un mécanisme de mouvement (8) qui déplace le dispositif d'imagerie (5) dans la direction de transport à la même vitesse que la vitesse de transport en synchronisation avec la vitesse de transport du transporteur (1) sur la base du signal de mesure provenant du dispositif de détection de quantité de mouvement (4) ;
un processeur d'imagerie (51) qui réalise le traitement d'image sur la base des informations tridimensionnelles acquises par le dispositif d'imagerie (5) et génère les informations nécessaires, nécessaires pour prélever sélectivement la pièce spécifique (2a) parmi la pluralité de pièces (2), les informations nécessaires comprenant les coordonnées de position, les angles et les types de pièces ;
un robot (6) qui maintient la pièce spécifique (2a) de la pluralité de pièces (2) et déplace la pièce spécifique (2a) maintenue jusqu'à une position prédéterminée sur la base des informations nécessaires acquises par le processeur d'imagerie (51) ; et
un organe de commande (52) qui commande un mouvement du dispositif d'imagerie (5) par le mécanisme de mouvement sur la base de la vitesse de transport du transporteur (1) et du signal de mesure provenant du dispositif de détection de quantité de mouvement (4) et commande un fonctionnement du robot (6) sur la base de la vitesse de transport du transporteur (1), du signal de mesure provenant du dispositif de détection de quantité de mouvement (4) et des informations nécessaires acquises par le processeur d'imagerie (51),
dans lequel l'organe de commande (52) commande le mouvement du dispositif d'imagerie (5) par le mécanisme de mouvement (8) et l'organe de commande (52) amène le robot (6) à maintenir la pièce spécifique (2a) pour la déplacer dans la position prédéterminée afin de réaliser le tri de la pluralité de pièces (2),
dans lequel la pluralité de pièces (2) sont transportées à intervalles dans la direction de transport,
le dispositif de prélèvement comprenant en outre :

un calculateur (50) qui calcule les intervalles de la pluralité de pièces (2) sur la base des informations de détection provenant du détecteur d'objet (3), est prévu, et
l'organe de commande (52) qui commande le mécanisme de mouvement (8) afin de déplacer le dispositif d'imagerie (5) dans une direction opposée à la direction de transport avant de commencer l'imagerie sur la base des intervalles calculés,
dans lequel le calculateur (50) calcule une quantité de mouvement du dispositif d'imagerie (5) dans la direction opposée à la direction de transport sur la base des intervalles de la pluralité de pièces (2), et
l'organe de commande (52) commande le mécanisme de mouvement (8) afin de déplacer le dispositif d'imagerie (5) dans la direction opposée à la direction de transport avant de commencer l'imagerie selon la quantité de mouvement calculée,
le dispositif de prélèvement comprenant encore en outre :

un calculateur qui calcule une position de chacune de la pluralité de pièces (2) dans un champ de vision de dispositif d'imagerie (10) d'après une relation entre la position de chacune de la pluralité de pièces (2) dans la direction de transport et une position actuelle du dispositif d'imagerie (5) obtenue par le détecteur d'objet (3) et le dispositif de détection de quantité de mouvement (4) et calcule le moment où un seul groupe de pièces (20), dans lequel les ombres de la pluralité de pièces (2) ne font qu'une, est placé dans le champ de vision de dispositif d'imagerie (10), lorsque la pluralité de pièces (2) sont projetées dans une direction transversale du transporteur (1) à partir de la position calculée de chacune de la pluralité de pièces (2), où lorsque dans chacune des deux pièces (20a et 20b) différentes constituant le groupe de pièces (20), la direction de transport est définie comme étant l'axe X, une pointe de la première pièce (20a) du côté en aval dans la direction de transport est définie comme étant Xmax-a, une extrémité arrière de la première pièce (20a) du côté en amont dans la direction de transport est définie comme étant Xmin-a, une pointe de la seconde pièce (20b) du côté en aval dans la direction de transport est définie comme étant Xmax-b, et une extrémité arrière de la seconde pièce (20b) du côté en amont dans la direction de transport est définie comme étant Xmin-b, le groupe de pièces (20) est désigné, dans lequel l'une des deux expressions relationnelles (1) et (2) suivantes est satisfaite :

$$\text{Xmax-a} > \text{Xmax-b} > \text{Xmin-a} > \text{Xmin-b} \quad (1)$$

$$\text{Xmax-a} > \text{Xmax-b} > \text{Xmin-b} > \text{Xmin-a} \quad (2),$$

dans lequel le groupe de pièces (20), dans lequel les ombres de la pluralité de pièces (2) ne font qu'une, est le groupe de pièces (20) se composant d'une pluralité de pièces (2), dont les coordonnées de position (X) dans la direction de transport de la pièce se chevauchent,
dans lequel l'organe de commande (52) commande le mécanisme de mouvement (8) afin de commencer le mouvement du dispositif d'imagerie (5) au moment calculé.

2. Dispositif de prélèvement selon la revendication 1,

dans lequel le dispositif d'imagerie (5) est configuré pour se déplacer dans une plage de mouvement définie par une limite en amont et une limite en aval, et
le détecteur d'objet (3) est disposé sur un côté en amont du transporteur (1) par rapport à une extrémité en amont d'un champ de vision de dispositif d'imagerie (10) du dispositif d'imagerie (5) positionné dans la limite en amont dans la direction de transport.

*FIG. 1*

EP 4 015 097 B1

*FIG. 2*

EP 4 015 097 B1

13

FIG. 3

EP 4 015 097 B1

FIG. 4

## FIG. 5

EP 4 015 097 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5464176 B
- US 2010094453 A1
- CN 108593669 A
- WO 2020147713 A1
- JP 5837065 B